(19) Europäisches Patentamt / European Patent Office / Office européen des brevets

(11) **EP 3 951 617 B1**

(12) **EUROPEAN PATENT SPECIFICATION**

(45) Date of publication and mention
of the grant of the patent:
**06.05.2026 Bulletin 2026/19**

(21) Application number: **20782577.9**

(22) Date of filing: **16.03.2020**

(51) International Patent Classification (IPC):
**G06F 16/783** (2019.01)    **G06V 10/82** (2022.01)
**G06V 20/40** (2022.01)

(52) Cooperative Patent Classification (CPC):
**G06V 10/82; G06F 16/783; G06V 10/806;
G06V 20/46**

(86) International application number:
**PCT/CN2020/079478**

(87) International publication number:
**WO 2020/199904 (08.10.2020 Gazette 2020/41)**

(54) **VIDEO DESCRIPTION INFORMATION GENERATION METHOD, VIDEO PROCESSING METHOD, AND CORRESPONDING DEVICES**

VERFAHREN ZUR ERZEUGUNG VON VIDEOBESCHREIBUNGSINFORMATIONEN, VERFAHREN ZUR VIDEOVERARBEITUNG UND ENTSPRECHENDE VORRICHTUNGEN

PROCÉDÉ DE GÉNÉRATION D'INFORMATIONS DE DESCRIPTION DE VIDÉO, PROCÉDÉ DE TRAITEMENT DE VIDÉO ET DISPOSITIFS CORRESPONDANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.04.2019 CN 201910263207**

(43) Date of publication of application:
**09.02.2022 Bulletin 2022/06**

(73) Proprietor: **Tencent Technology (Shenzhen) Company Limited Shenzhen, Guangdong, 518057 (CN)**

(72) Inventors:
• **WANG, Bairui**
**Shenzhen City, Guangdong 518057 (CN)**
• **MA, Lin**
**Shenzhen City, Guangdong 518057 (CN)**
• **JIANG, Wenhao**
**Shenzhen City, Guangdong 518057 (CN)**
• **LIU, Wei**
**Shenzhen City, Guangdong 518057 (CN)**

(74) Representative: **Gunzelmann, Rainer
Wuesthoff & Wuesthoff
Patentanwälte und Rechtsanwalt PartG mbB
Schweigerstraße 2
81541 München (DE)**

(56) References cited:
**CN-A- 105 279 495        CN-A- 107 256 221
CN-A- 109 189 989        CN-A- 109 325 148
CN-A- 109 359 214        CN-A- 109 359 214
CN-A- 109 409 221        CN-A- 109 960 747
US-A1- 2018 357 566**

• **LI SHUOHAO ET AL: "Deep hierarchical attention network for video description", JOURNAL OF ELECTRONIC IMAGING, S P I E - INTERNATIONAL SOCIETY FOR OPTICAL ENGINEERING, US, vol. 27, no. 2, 1 March 2018 (2018-03-01), pages 23027, XP060136203, ISSN: 1017-9909, [retrieved on 20180418], DOI: 10.1117/ 1.JEI.27.2.023027**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **NAYYER AAFAQ ET AL: "Video Description: A Survey of Methods, Datasets and Evaluation Metrics", ARXIV.ORG, CORNELL UNIVERSITY LIBRARY, 201 OLIN LIBRARY CORNELL UNIVERSITY ITHACA, NY 14853, 1 June 2018 (2018-06-01), XP081611240, DOI: 10.1145/ 3355390**

## Description

This application claims priority to Chinese Patent Application No. 201910263207.0, titled "METHOD AND APPARATUS FOR GENERATING VIDEO DESCRIPTION INFORMATION, AND VIDEO PROCESSING METHOD AND APPARATUS" filed with the China National Intellectual Property Administration on April 2, 2019.

## FIELD

Embodiments of the present disclosure relate to the technical field of image processing, and particularly, the embodiments of the present disclosure relate to a method and an apparatus for generating video description information, and a video processing method and apparatus.

## BACKGROUND

Artificial Intelligence (AI) is a theory, a method, a technology, and an application system in which a digital computer or a machine controlled by the digital computer simulates, extends, and expands human intelligence, to perceive an environment, obtain knowledge, and use knowledge so as to obtain an optimal result. In other words, artificial intelligence is a comprehensive technology of computer science, which attempts to understand the essence of intelligence and produce a new type of intelligent machine that can respond in a similar way to human intelligence. The artificial intelligence focuses on studying the design principles and implementation methods of various intelligent machines, to cause the machines to have the functions of perception, reasoning, and decision-making.

The artificial intelligence technology is a comprehensive discipline, and relates to a wide range of fields including both hardware technologies and software technologies. The basic artificial intelligence technologies generally include a sensor, a dedicated artificial intelligence chip, cloud computing, distributed storage, a big data processing technology, an operating/interaction system, and electromechanical integration and so on. The artificial intelligence software technologies mainly include a computer vision technology, a voice processing technology, a natural language processing technology, and machine learning/deep learning.

The computer vision (CV) technology is a science that studies how to cause a machine to "see". That is, a camera and a computer are used to replace human eyes to perform machine vision such as recognition, tracking, and measurement on a target, and graphic processing is performed, so that the computer processes the target into an image more suitable for human eyes to observe, or an image transmitted to an instrument for detection. As a scientific discipline, the computer vision studies related theories and technologies and attempts to establish an artificial intelligence system that can obtain information from images or multidimensional data. The computer vision technologies generally include image processing, image recognition, image semantic understanding, image retrieval, OCR, video processing, video semantic understanding, video content/behavior recognition, three-dimensional object reconstruction, a 3D technology, virtual reality, augmented reality, synchronous positioning, and map construction and so on, and further include biological feature recognition technologies such as common face recognition and fingerprint recognition.

Nature Language processing (NLP) is an important study direction in the fields of computer science and artificial intelligence. The natural language processing studies various theories and methods that enable effective communication between humans and computers in natural language. The natural language processing is a science that integrates linguistics, computer science, and mathematics. Therefore, studies in this field relate to natural languages, that is, languages used by people in daily life, and the natural language processing is closely related to linguistic studies. The natural language processing technology generally includes text processing, semantic understanding, machine translation, robot question and answer, and knowledge graph.

Under the background of the stable development of Internet and big data, demands for multimedia information are in explosive growth, resulting in that traditional information processing technologies cannot meet the needs of multimedia data on tasks such as labeling and description. Describing a video, an image, or the like in a natural language is simple for humans, but it is a difficult task for machines. This requires machines to overcome semantic difficulty in image understanding and correctly integrate computer vision and natural language processing. At present, the research in this direction has attracted extensive attention and can be effectively applied in the fields of security, home furnishing, medical treatment, and teaching.

The conventional technology can already implement the automatic description of a video by a machine to a certain extent. However, in the conventional technology, extracted frame-level features of a video are converted into video-level features, and then the video-level features directly function as an input of a decoder network to obtain natural language description, resulting in that the generated natural language description is often too simple, not conforming to human language habits, and thus affecting the subsequent understanding and analysis of the video. LI SHUOHAO et al., Deep Hierarchical Attention Network for Video Description (2018) discloses a deep hierarchical attention network for automatic video captioning, in which frame-level visual features are extracted using a convolutional neural network and

## EP 3 951 617 B1

processed through a temporal attention mechanism. An LSTM-based decoder generates natural language descriptions by dynamically weighting video frame features at each timestep. The approach focuses on improving visual-semantic alignment through hierarchical attention. CN 109 359 214 A discloses a video description generation method based on deep neural networks, wherein video frame features are extracted and processed using recurrent neural networks and attention mechanisms. The generated textual descriptions are used for downstream applications such as classification or retrieval. The system emphasizes semantic feature learning and attention-based decoding for improved description accuracy.

## SUMMARY

The invention is defined by the appended claims. To overcome the foregoing technical problem or at least partially resolve the foregoing technical problem, the following technical solutions are provided according to embodiments of the present disclosure.

According to a first aspect, a method for generating video description information is provided according to embodiments of the present disclosure. The method is performed by an electronic device and includes:

> obtaining a video feature sequence on a frame level corresponding to a video;
> generating a global part-of-speech sequence feature of the video according to the video feature sequence; and
> generating natural language description information of the video according to the global part-of-speech sequence feature and the video feature sequence.

According to a second aspect, a video processing method based on natural language description information of a video is provided according to embodiments of the present disclosure. The method is performed by an electronic device and includes:

> obtaining natural language description information of a video, where the natural language description information of the video is obtained by utilizing the method according to the first aspect; and
> processing the video based on the natural language description information.

According to a third aspect, an apparatus for generating video description information is provided according to embodiments of the present disclosure, The apparatus includes an obtaining module, a first generation module and a second generation module. The obtaining module is configured to obtain a video feature sequence on a frame level corresponding to a video. The first generation module is configured to generate a global part-of-speech sequence feature of the to-be-described video according to the video feature sequence. The second generation module is configured to generate natural language description information of the video according to the global part-of-speech sequence feature and the video feature sequence.

According to a fourth aspect, a video processing apparatus based on natural language description information of a video is provided according to embodiments of the present disclosure. The video processing apparatus includes an obtaining module and a processing module. The obtaining module is configured to obtain natural language description information of a to-be-processed video. The natural language description information of the video is obtained by utilizing the method according to the first aspect. The processing module is configured to process the video based on the natural language description information.

According to a fifth aspect, an electronic device is provided according to embodiments of the present disclosure. The electronic device includes a processor and a memory. The memory stores instructions, and the instructions, when executed by the processor, cause the processor to perform the method according to the first aspect or the second aspect.

According to a sixth aspect, a computer-readable storage medium storing a computer instruction, a program, a code set, or an instruction set is provided according to embodiments of the present disclosure. The computer instruction, the program, the code set, or the instruction set, when run on a computer, causes the computer to perform the method according to the first aspect or the second aspect.

According to the method and apparatus for generating video description information , the electronic device, and the readable medium provided in the embodiments of the present disclosure, a video feature sequence on a frame level corresponding to a video is obtained; a global part-of-speech sequence feature of the video is generated according to the video feature sequence; and natural language description information of the video is generated according to the global part-of-speech sequence feature and the video feature sequence, so that the global part-of-speech sequence feature corresponding to a natural language can be extracted effectively from video data and can be used for generating accurate natural language description, thereby improving a video description capability.

4

# EP 3 951 617 B1

## BRIEF DESCRIPTION OF THE DRAWINGS

To describe the technical solutions in the embodiments of the present disclosure more clearly, the accompanying drawings required for describing the embodiments of the present disclosure are briefly described hereinafter.

FIG. 1A is a schematic flowchart of a method for generating video description information according to an embodiment of the present disclosure.

FIG. 1B is a schematic flowchart of a video processing method based on natural language description information of a video according to an embodiment of the present disclosure.

FIG. 2 is a framework and a flowchart of generating natural language description information according to an embodiment of the present disclosure.

FIG. 3 is a diagram of a module architecture of a part-of-speech sequence feature generator according to an embodiment of the present disclosure.

FIG. 4 is a diagram of a module architecture of a decoder according to an embodiment of the present disclosure.

FIG. 5 is a schematic structural diagram of an apparatus for generating video description information according to an embodiment of the present disclosure.

## DETAILED DESCRIPTION OF EMBODIMENTS

Embodiments of the present disclosure are described in detail below, and examples of the embodiments are shown in accompanying drawings. The same or similar elements or the elements having same or similar functions are denoted by the same or similar reference numerals throughout the description. The embodiments described below with reference to the accompany drawings are exemplary, and are only used to interpret the present disclosure and should not be construed as a limitation to the present disclosure.

A person skilled in the art may understand that, the singular forms "a", "an", "said", and "the" used herein may include the plural forms, unless the context clearly indicates otherwise. It is to be further understood that, the terms "include" and/or "comprise" used in this specification of the present disclosure refer to the presence of stated features, integers, steps, operations, elements, and/or components, but do not preclude the presence or addition of one or more other features, integers, steps, operations, elements, components, and/or combinations thereof. It is to be understood that, when an element is "connected" or "coupled" to another element, the element may be directly connected to or coupled to another element, or an intermediate element may exist. In addition, the "connection" or "coupling" used herein may include a wireless connection or a wireless coupling. The term "and/or" used herein includes all of, or any of or all combinations of one or more related listed items.

To make objectives, technical solutions, and advantages of the embodiments of the present disclosure clearer, implementations of the present disclosure are described in detail with reference to the accompanying drawings hereinafter.

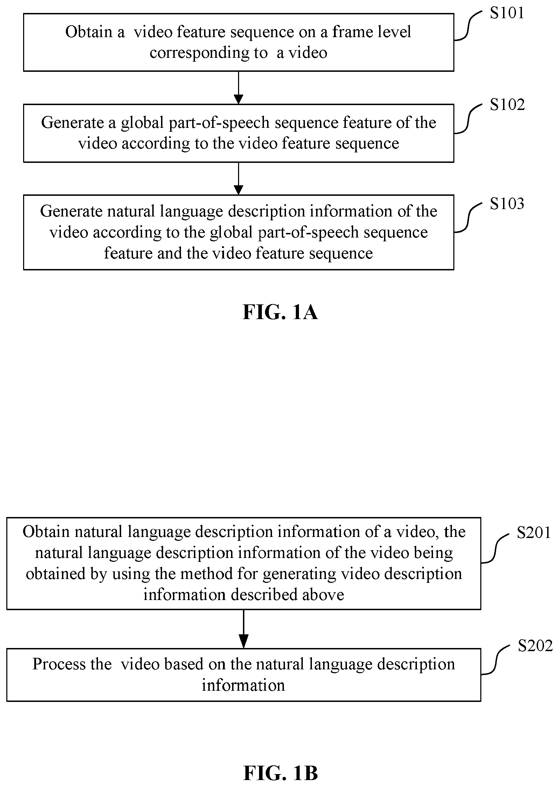

A method for generating video description information is provided according to embodiments of the present disclosure. The method is performed by an electronic device. The electronic device is described in detail below, and details are not described herein. As shown in FIG. 1, the method includes the following steps S101 to S103.

In step S101, a video feature sequence on a frame level corresponding to a video is obtained.

In step S102, a global part-of-speech sequence feature of the video is generated according to the video feature sequence.

In step S103, natural language description information of the video is generated according to the global part-of-speech sequence feature and the video feature sequence.

According to the method for generating video description information provided in the embodiments of the present disclosure, a global part-of-speech sequence feature corresponding to a natural language can be extracted effectively from video data and can be used for generating accurate natural language description, thereby improving a video description capability.

In this embodiment of the present disclosure, the video may be a video shot in real time, for example, a video shot by a camera in real time needs to be described in an intelligent monitoring and behavior analysis scenario. In this case, the video may be a video shot by the camera in real time. Alternatively, the video may be a video obtained from a network, for example, a video obtained from the network needs to be described by using a natural language in a video content preview scenario, to preview video content by a user. In this case, the video may be a video to be previewed that is obtained from the network. Alternatively, the video may be a locally stored video, for example, in a video classification storage scenario, a video needs to be described and is classified and stored according to description information. In this case, the video may be a locally stored video that needs to be classified.

A person skilled in the art should understand that, the foregoing several scenarios and video sources are only schematic, and appropriate changes may be made. The sources and scenarios of the video are not limited in the embodiments of the present disclosure.

In an actual application, the video may be considered as an image set with consecutive frames, and processing of the video includes processing of each frame of image in the image set.

In this embodiment of the present disclosure, a frame-level feature is a video feature extracted from each frame of video image of the video, and the video feature sequence on a frame level is a sequence formed by combining video features of all frames of video images. For example, video features of all frames of images of the video may be extracted by using a convolutional neural network, and the video feature sequence on the frame level is obtained based on the extracted video features of all frames of images.

As an example, for a video with m frames of images, a video feature is extracted from each frame of video image of the video. For example, a video feature extracted from a first frame of image of the video is indicated as $v_1$, a video feature extracted from a second frame of image of the video is indicated as $v_2$, a video feature extracted from an m-th frame of image of the video is indicated as $v_m$, and so on. A video feature sequence on a frame level may be obtained based on the extracted video features of all frames of images, that is, $V=\{v_1, v_2, ..., v_m\}$.

In an embodiment of the present disclosure, step S101 is performed as follows. Specifically, a convolutional neural network feature is extracted for all frames of the video by using a convolutional neural network (CNN), to obtain the video feature sequence on the frame level corresponding to the video, that is, $V=\{v_1, v_2, ..., v_m\}$. The video feature sequence on the frame level is directly used in step S102.

In an actual application, there are multiple convolutional neural networks for extracting the convolutional neural network feature. A person skilled in the art may select the convolutional neural network according to the actual situations. A type of the convolutional neural network is not limited in the embodiment of the present disclosure.

In an embodiment of the present disclosure, step S101 may be performed in another manner as follows. Specifically, the video feature sequence carries time series information. That is, the convolutional neural network feature (that is, a frame-level video feature) is extracted for each frame of the video by using the convolutional neural network, to obtain a convolutional neural network feature sequence (that is, the video feature sequence on the frame level), and then time series information of the extracted convolutional neural network feature sequence is extracted and fused by using a recurrent neural network, to obtain a video feature sequence on a frame level corresponding to the video and carrying the time series information.

The video feature sequence on the frame level with the time series information is obtained in the following manner. Time series information of the video feature sequence on the frame level is extracted based on the video feature sequence on the frame level $V=\{v_1, v_2, ..., v_m\}$ and according to a time series relationship between frame-level video features ($v_1$ to $v_m$) in a time direction, and the extracted time series information is fused with the video feature sequence on the frame level.

As an example, for a video with m frames, after a convolutional neural network feature sequence $V=\{v_1, v_2, ..., v_m\}$ is obtained, time series information in the sequence V is obtained by using a recurrent neural network, and the time series information is embedded into the sequence V. An execution process may be represented as:

$$h_i=RNN(v_i, h_{i-1})$$

where RNN represents a general calculation process of the recurrent neural network, and $h_{i-1}$ represents a video feature sequence on on a frame level of first i-1 frames in which time series information is embedded. After an i-th frame of convolutional neural network feature is inputted, to obtain a video feature sequence on a frame level $h_i$ of the first i frames in which the time series information is embedded, video feature sequences on a frame level of first m frames in which the time series information is embedded are combined, to finally obtain a video feature sequence carrying the time series information, that is, $H=\{h_1, h_2, ..., h_m\}$.

In the embodiment of the present disclosure, the video feature sequence carrying the time sequence information $H=\{h_1, h_2, ..., h_m\}$ is used for performing step S102. The accuracy and the reliability of subsequent video processing can be improved by using the video feature sequence carrying the time series information.

In an actual application, the time sequence information may be extracted and fused by using a recurrent neural network based on a long short-term memory (LSTM) unit, or the like.

In the embodiment of the present disclosure, in a case that the electronic device includes an encoder, step S101 may be performed by the encoder in the electronic device. The encoder may include a convolutional neural network. After a video is inputted to the encoder, a video feature sequence on a frame level corresponding to the video is outputted.

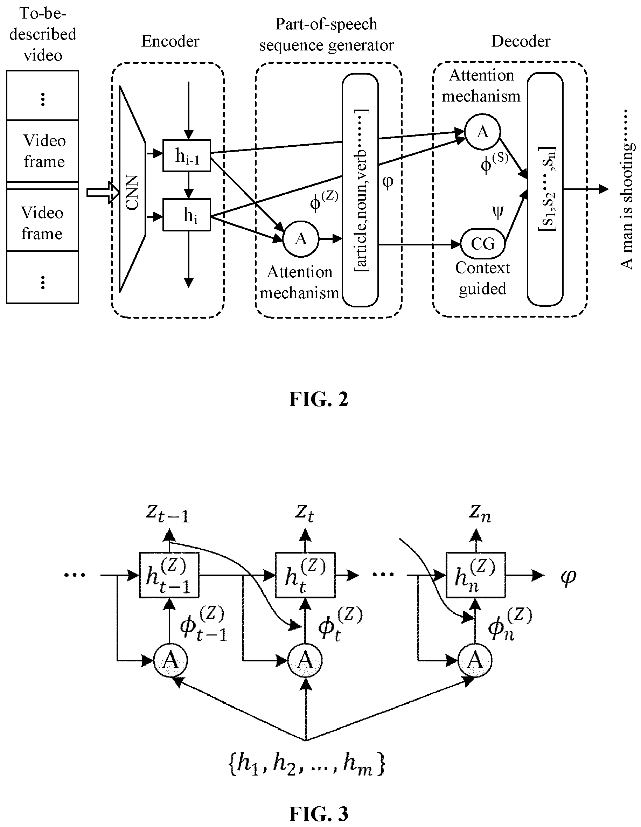

Specifically, the video is inputted to the encoder, that is, inputted to the convolutional neural network in the encoder, the video feature sequence on a frame level corresponding to the video is extracted by using the convolutional neural network; the convolutional neural network outputs the extracted video feature sequence on a frame level as an output of the encoder, and step S102 is performed by using the video feature sequence outputted by the encoder. Alternatively, the encoder may include a convolutional neural network and a recurrent neural network. After a video is inputted to the encoder, a video feature sequence on a frame level corresponding to the video and carrying time series information is outputted, as shown by an encoder in FIG. 2. Specifically, the video is inputted to the encoder, that is, inputted to the convolutional neural network (corresponding to a CNN in FIG. 2) in the encoder, the video feature sequence on a frame level corresponding to the video is extracted by using the convolutional neural network, and the convolutional neural network outputs the extracted video feature sequence on a frame level. The extracted video feature sequence on a frame level is inputted to the recurrent neural network (corresponding to modules such as hi-1 and hi in FIG. 2) in the encoder, time series information of the extracted convolutional neural network feature sequence is extracted and fused by using the recurrent neural network; the recurrent neural network outputs the video feature sequence carrying the time series information as an output of the encoder, and step S102 is performed by using the video feature sequence outputted by the encoder.

Further, in step S102 in the embodiment of the present disclosure, in a case that the electronic device includes a part-of-speech sequence generator, the global part-of-speech sequence feature of the video may be generated by using the part-of-speech sequence generator in the electronic device according to the video feature sequence.

That is, potential parts of speech of natural language description of the video are predicted according to the video feature sequence outputted in step S101, to generate the global part-of-speech sequence feature.

In the embodiment of the present disclosure, a global part-of-speech refers to parts of speech corresponding to natural language description information of the video; a global part-of-speech sequence is a sequence of a combination of the parts of speech; and the global part-of-speech sequence feature is a feature of the sequence of the combination of the parts of speech. A part of speech is an attribute of a character, a word, or a phrase, and multiple parts of speech are defined in various languages. As an example, Chinese parts of speech include, but is not limited to: noun, verb, adjective, classifier, adverb, preposition, and the like. English parts of speech include, but is not limited to: noun, verb, gerund, adjective, adverb, article, preposition, and the like. In another language, other types of parts of speech may also be included. Details are not described herein. A part-of-speech sequence is relative to a sentence described in a natural language, and the sentence is usually formed by two or more words. A part-of-speech sequence feature is a combination of parts-of-speech features of words in the sentence. For example, if potential content of a video is "a man is shooting...", a possible part-of-speech sequence feature is a feature corresponding to [article, noun, verb...]. It may be understood that in a specific application, English letters may be used for representing the parts of speech. For example, art. represents article, n. represents noun, and v. represents verb, that is, the part-of-speech sequence feature is the feature corresponding to [art., n., v....].

In an embodiment of the present disclosure, to obtain the global part-of-speech sequence feature according to the video feature sequence, step S102 may include the following steps S1021 and S1022.

In step S1021, a fused feature of the video is determined according to the video feature sequence.

In step S1022, the global part-of-speech sequence feature of the video is generated based on the fused feature of the video by using a first neural network.

The fused feature is a fused video feature obtained after video features in the video feature sequence are fused. In an actual application, multiple fusion manners may be used. Fusion manners are not limited in the embodiment of the present application. For ease of understanding, two implementations are provided below.

In one implementation, in step S1021, a video feature sequence may be transformed into a fused feature $\phi^{(Z)}$ by using an average feature algorithm, that is, an average value of video features in the video feature sequence is calculated, to obtain the fused feature $\phi^{(Z)}$. Subsequently, the fused feature is inputted to the first neural network, and the global part-of-speech sequence feature of the video is outputted. Fused features inputted at different time instants of the first neural network may be the same fused feature $\phi^{(Z)}$.

In the other implementation, in step S1021, the video feature sequence obtained in step S101 may be integrated into different fused features corresponding to different time instants, for example, a fused feature $\phi_t^{(Z)}$ corresponding to a time instant t, for all the time instants of the first neural network by using a nonlinear network such as a network with an attention mechanism (or referred to as a fusion network). In this embodiment of the present disclosure, the first neural network may be a recurrent neural network. Fused features need to be inputted to the recurrent neural network at different time instants. The fused features inputted at the time instants of the first neural network are fused features corresponding to the time instants.

As an example, FIG. 3 shows the first neural network (corresponding to a neural network formed by modules such as $h_{t-1}^{(Z)}$, $h_t^{(Z)}$, and $h_{t+1}^{(Z)}$ in FIG. 3) and the fusion network (corresponding to a network A in FIG. 3). The first neural network in the example is the recurrent neural network. A fused feature $\phi_{t-1}^{(Z)}$ is inputted at a time instant t-1 of the first neural network; a fused feature $\phi_t^{(Z)}$ is inputted at a time instant t of the first neural network; a fused feature $\phi_n^{(Z)}$ is inputted at a time instant n of the first neural network, and so on.

In the second implementation of the fused feature, weights corresponding to the time instants of the first neural network are determined. For example, a weight corresponding to a time instant t is a$^t$. The weights (including a weight corresponding to each time instant) are weights of frame features in a video feature sequence, for example, a weight of an i-th frame feature in the video feature sequence is a$_i$. Subsequently, the frame features in the video feature sequence are fused according to the weights corresponding to the time instants (that is, a weight of a first frame feature in the video feature sequence that corresponds to each time instant, for example, a weight of the i-th frame feature in the video feature sequence that corresponds to the time instant t is $a_i^t$), to obtain fused features of the video corresponding to the time instants, that is:

$$\phi_t^{(Z)}(H) = \sum_{i=1}^{m} \alpha_i^t \, h_i$$

where $\phi_t^{(Z)}(H)$ represents a fused feature obtained at the time instant t of the first neural network. $a_i^t$ represents a weight dynamically allocated to the i-th frame feature at the time instant t according to an attention mechanism, which meets:

$$\sum_{i=1}^{m} \alpha_i^t = 1$$

It may be understood that a larger weight indicates that a corresponding frame feature is more beneficial for prediction of a current part of speech.

In the embodiment of the present disclosure, a weight corresponding to a current time instant may be obtained according to a part-of-speech sequence feature determined at a previous time instant and frame features in the video feature sequence. Specifically, $a_i^t$ is obtained as follows:

$$\alpha_i^t = \exp(e_i^t) / \sum_{j=1}^{m} \exp(e_j^t)$$

$$e_i^t = \mathbf{w}^\top \tanh(\mathbf{W} h_{t-1}^{(Z)} + \mathbf{U} h_i + \mathbf{b})$$

where w$^\mathsf{T}$, W, U, and b are all trainable parameters, for example, in a case that weights are allocated by using the attention mechanism network, w$^\mathsf{T}$, W, U, and b are parameters learned from a process of training the attention mechanism network; exp() represents an exponential function, tanh() represents a hyperbolic tangent function which may function as an activation function herein; $h_{t-1}^{(Z)}$ represents a part-of-speech sequence feature determined at a previous time instant, and h$_i$ represents frame features in a video feature sequence.

Further, in step S1022, the fused feature obtained in step S1021 is inputted to the first neural network, and the global part-of-speech sequence feature of the video is outputted.

In the embodiment of the present disclosure, the first neural network may be a recurrent neural network. Specifically, as shown in FIG. 3, the first neural network may include one layer of long short-term memory unit (corresponding to a neural network formed by modules such as $h_{t-1}^{(Z)}$, $h_t^{(Z)}$, and $h_{t+1}^{(Z)}$ in FIG. 3). An execution process may be represented as:

$$h_t^{(Z)}, c_t^{(Z)} = \text{LSTM}^{(Z)}\left(\left[\text{E}(z_{t-1}), \phi_t^{(Z)}(H)\right], h_{t-1}^{(Z)}\right)$$

where LSTM$^{(Z)}$ represents a related operation of one layer of long short-term memory unit in the first neural network; $z_{t-1}$ represents a part of speech predicted at a previous time instant, or may be represented as a memory state $c_{t-1}^{(Z)}$ of the long short-term memory unit at a previous time instant; $\phi_t^{(Z)}(H)$ represents the fused feature corresponding to the time instant t of the first neural network, or may be replaced with $\phi^{(Z)}(H)$ same at all the time instants, $h_{t-1}^{(Z)}$ represents a part-of-speech sequence feature determined at the previous time instant, and also corresponds to a hidden state of the long short-term memory unit at the previous time instant; E($\cdot$) represents mapping an input to a vector space; and [$\cdot$] represents a cascade operation. As shown in FIG. 3, a hidden state $h_t^{(Z)}$ and a memory state $c_t^{(Z)}$ of the long short-term memory unit at a current time instant respectively represent a part-of-speech sequence feature determined at the current time instant and the part of speech $z_t$ predicted at the current time instant.

In this way, as shown in FIG. 3, each part of speech may be predicted. For example, in FIG. 3, $z_{t-1}$ is outputted by $h_{t-1}^{(Z)}$, $z_t$ is outputted by $h_t^{(Z)}$, $z_{t+1}$ is outputted by $h_{t+1}^{(Z)}$, and so on. A part-of-speech sequence Z={$z_1$, $z_2$, ..., $z_n$} and a global part-of-speech sequence feature are obtained. Specifically, after the first neural network determines that the entire part-of-speech sequence is generated, a hidden state of a last time instant includes information about the entire sequence, that is, the global part-of-speech sequence feature:

$$\varphi = h_n^{(Z)}$$

In the embodiment of the present disclosure, as shown in FIG. 2, step S102 may be performed by using a part-of-speech sequence generator. The part-of-speech sequence generator may include a network (the attention mechanism network A) generating the fused feature, and the first neural network. After the video feature sequence is inputted to the part-of-speech sequence generator, the global part-of-speech sequence feature is outputted, as shown by the part-of-speech sequence generator in FIG. 2. Specifically, a video feature sequence H={$h_1$, $h_2$, ..., $h_m$} (corresponding to video features carrying time series information outputted by the modules such as $h_{i-1}$ and $h_i$ in FIG. 2; or may be V={$v_1$, $v_2$, ..., $v_m$} directly outputted by the CNN in another embodiment; and for a specific application manner, one may refer to H={$h_1$, $h_2$, ..., $h_m$}, and details are not described below again) is inputted to the part-of-speech sequence generator, that is, inputted to the attention mechanism network A in the part-of-speech sequence generator. The video feature sequence H={$h_1$, $h_2$, ..., $h_m$} is fused by using the attention mechanism network A, and the attention mechanism network A outputs a fused feature $\phi^{(Z)}$ and inputs the fused feature $\phi^{(Z)}$ to the first neural network. The first neural network outputs a predicted global part-of-speech sequence feature $\varphi$, for example, the feature corresponding to [article, noun, verb...] shown in FIG. 2. The predicted global part-of-speech sequence feature functions as an output of the part-of-speech sequence generator, and step S103 is performed by using the global part-of-speech sequence feature outputted by the part-of-speech sequence generator.

In the embodiment of the present disclosure, a probability for predicting each part of speech correctly is represented as follows:

$$P(z_t|z_{<t}, V; \theta_z) = \text{Softmax}\left(\mathbf{W}_z h_t^{(Z)} + \mathbf{b}_z\right)$$

where $W_z$ and $b_z$ represent learnable parameters, for example, parameters learned from a process of training the part-of-speech sequence generator. $\theta_z$ represents all parameters of the part-of-speech sequence generator. $P(z_t | z_{<t}, V; \theta_z)$ represents that a probability of a current part of speech $z_t$ is correctly predicted for a given video V under the premise that a part of a part-of-speech sequence $z_{<t}$={$z_1$, $z_2$, ..., $z_{t-1}$} has been predicted.

Further, in step S103 in the embodiment of the present disclosure, the natural language description information of the video is generated according to the global part-of-speech sequence feature and the video feature sequence.

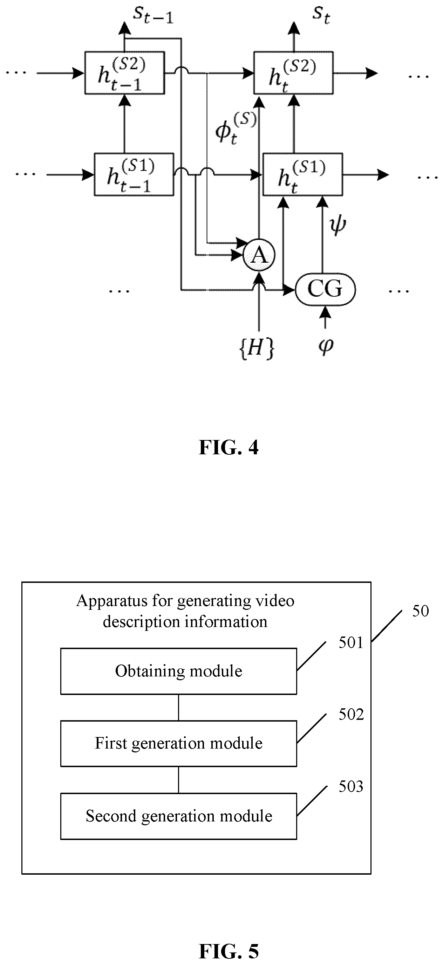

In the embodiment of the present disclosure, as shown in FIG. 4, step S103 may include the following steps S1031 and S1032.

In step S1031, a fused feature of the video is determined according to the video feature sequence.

In step S1032, the natural language description information of the video is generated according to the global part-of-speech sequence feature and the fused feature of the video by using a second neural network.

For an implementation of step S1031, one may refer to description of step S1021. As shown in FIG. 4, if the fused feature is determined according to the attention mechanism, in step S1031, weights corresponding to time instants of the second neural network (corresponding to a neural network formed by modules such as $h_{t-1}^{(S1)}$, $h_{t-1}^{(S2)}$, $h_t^{(S1)}$, and $h_t^{(S2)}$ in FIG. 4) may be calculated by using hidden states of two layers. Weights corresponding to the time instants of the first neural network are determined, for example, a weight corresponding to a time instant t is $\beta^t$. The weights (including a weight corresponding to each time instant) are weights of frame features in a video feature sequence. For example, a weight of the i-th frame feature in the video feature sequence is $\beta_i$. The frame features in the video feature sequence are fused according to the weights corresponding to the time instants (that is, a weight of the first frame feature in the video feature sequence that corresponds to each time instant, for example, a weight of the i-th frame feature in the video feature sequence that corresponds to the time instant t is $\beta_i^t$), to obtain fused features of the video corresponding to the time instants:

$$\phi_t^{(S)}(H) = \sum_{i=1}^{m} \beta_i^t \, h_i$$

where $\phi_t^{(S)}(H)$ represents a fused feature obtained at the time instant t of the second neural network. $\beta_i^t$ represents a weight dynamically allocated to the i-th frame feature at the time instant t according to an attention mechanism, which meets:

$$\sum_{i=1}^{m} \beta_i^t = 1$$

For another same part, one may refer to description in step S1021, and details are not described herein again.

Further, in step S1032, the global part-of-speech sequence feature obtained in step S102 and the fused feature obtained in step S1031 are inputted to the second neural network, and the natural language description information of the video is outputted.

In the embodiment of the present disclosure, step S1032 may include the following steps SA to SC.

In step SA, prediction guided information for a current time instant in the global part-of-speech sequence feature is obtained according to word information corresponding to a previous time instant and the global part-of-speech sequence feature.

In step SB, word information corresponding to the current time instant is obtained according to the fused feature of the video and the prediction guided information by using the second neural network.

In step SC, the natural language description information of the video is generated according to word information corresponding to time instants.

In the embodiment of the present disclosure, the word information may include, but is not limited to, a character, a word, or a phrase corresponding to a natural language.

Step SA may be implemented according to a cross-gate mechanism:

$$\psi = \sigma(\mathrm{W}s_{t-1} + \mathrm{b})\varphi$$

where $s_{t-1}$ represents word information predicted at a previous time instant; W and b represent learnable parameters, for example, parameters learned from a process of training the cross-gate mechanism network; and $\sigma(\cdot)$ represents a nonlinear activation function. Step SA is performed to enhance prediction guided information related to a to-be-predicted word at a current time instant in the global part-of-speech sequence feature by using a word at a previous time instant, and to predict the word at the current time instant in step SB by using the prediction guided information.

In the embodiment of the present disclosure, as shown in FIG. 4, step SA may be implemented by using a context guided (CG), that is, the prediction guided information for the current time instant in the global part-of-speech sequence feature is obtained according to the word information determined at the previous time instant and the global part-of-speech sequence feature by using the context guided CG.

As shown in FIG. 4, the second neural network may be a recurrent neural network. Specifically, the recurrent neural network may include double-layer long short-term memory units (a first layer formed by modules such as $h_{t-1}^{(S1)}$ and $h_t^{(S1)}$ and a second layer formed by modules such as $h_{t-1}^{(S2)}$ and $h_t^{(S2)}$ in FIG. 4), that is, in step SB, the word information corresponding to the current time instant is obtained according to the fused feature of the video and the prediction guided information by using the double-layer long short-term memory units. An execution process may be represented as:

$$h_t^{(S1)}, c_t^{(S1)} = \text{LSTM}^{(S1)}([E(s_{t-1}), \psi], h_{t-1}^{(S1)})$$

Formula 1

$$h_t^{(S2)}, c_t^{(S2)} = \text{LSTM}^{(S2)}([h_t^{(S1)}, \phi_t^{(S)}(H)], h_{t-1}^{(S2)})$$

Formula 2

where LSTM$^{(S1)}$ and LSTM$^{(S2)}$ respectively represents related operations of the first layer of long short-term memory unit and the second layer of long short-term memory unit in the second neural network; $S_{t-1}$ represents word information predicted at a previous time instant, or may be represented as a hidden state $h_{t-1}^{(S2)}$ of the second layer of long short-term memory unit at a previous time instant; $\psi$ represents prediction guided information related to a to-be-predicted word outputted by the context guided at a current time instant; $h_{t-1}^{(S1)}$ represents a hidden state of the first layer of long short-term memory unit at the previous time instant and may function as an input of the first layer of long short-term memory unit at the current time instant; $E(\cdot)$ represents mapping the input to a vector space; and $[\cdot]$ represents a cascade operation. As shown in FIG. 4, a memory state $c_t^{(S1)}$ and a hidden state $h_t^{(S1)}$ (corresponding to an output from a right side of $h_t^{(S1)}$ in FIG. 4) of the first layer of long short-term memory unit at the current time instant may be obtained by using formula 1, as an input of the first layer of long short-term memory unit at a next time instant. The hidden state $h_t^{(S1)}$ of the first layer of long short-term memory unit at the current time instant functions as an input (corresponding to an output from an upper side of $h_t^{(S1)}$ in FIG. 4) of the second layer of long short-term memory unit at the current time instant. $\phi_t^{(S)}(H)$ represents a fused feature corresponding to a time instant t of the second neural network, or may be replaced with $\phi^{(S)}(H)$ same at all time instants; and $h_{t-1}^{(S2)}$ represents a hidden state of the second layer of long short-term memory unit at the previous time instant and may function as an input of the second layer of long short-term memory unit at the current time instant. A memory state $c_t^{(S2)}$ and a hidden state $h_t^{(S2)}$ of the second layer of long short-term memory unit at the current time instant may be obtained by using formula 2, and the hidden state $h_t^{(S2)}$ (corresponding to an output from an upper side of $h_t^{(S2)}$ in FIG. 4) of the second layer of long short-term memory unit at the current time instant is word information $S_t$ predicted at the current time instant.

It may be understood that for another recurrent neural network, two hidden states h are outputted from each of the layers, and word information can be predicted.

In this way, the second neural network may predict natural language description word by word. For example, in FIG. 4, $s_{t-1}$ is outputted by $h_{t-1}^{(S2)}$, st is outputted by $h_t^{(S2)}$, and so on. Further, in step SC, the natural language description information S={$s_1, s_2, ..., s_n$} of the video is generated according to word information $s_1, s_2, ..., s_n$ corresponding to the time instants.

In the embodiment of the present disclosure, as shown in FIG. 2, in a case that the electronic device includes a decoder, step S103 may be performed by the decoder in the electronic device. The decoder may include a network (the attention mechanism network A) generating the fused feature, and the second neural network. After the video feature sequence and the global part-of-speech sequence feature are inputted to the decoder, the natural language description information of the video is outputted, as shown by the decoder in FIG. 2. Specifically, a video feature sequence H={$h_1$, $h_2$, ..., $h_m$} (corresponding to the video features carrying the time series information outputted by the modules such as $h_{i-1}$ and $h_i$ in FIG. 2; in another embodiment, may be V={$v_1$, $v_2$, ..., $v_m$} directly outputted by the CNN; and for a specific implementation, one may refer to H={$h_1$, $h_2$, ..., $h_m$}, and details are not described below again) and a global part-of-speech sequence feature φ are inputted to the decoder. The video feature sequence H={$h_1$, $h_2$, ..., $h_m$} is inputted to the attention mechanism network A in the decoder, and the video feature sequence H={$h_1$, $h_2$, ..., $h_m$} is fused by using the attention mechanism network A. The attention mechanism network A outputs a fused feature $\phi^{(S)}$, and the fused feature $\phi^{(S)}$ is inputted to the second neural network. The global part-of-speech sequence feature φ is inputted to a context guided CG (corresponding to a guided module in FIG. 2) in the decoder, prediction guided information related to a to-be-predicted word at a current time instant in the global part-of-speech sequence feature is enhanced by using the context guided CG based on a word. The context guided CG outputs the prediction guided information, and the prediction guided information is inputted to the second neural network. The second neural network outputs predicted word information, for example, [$s_1$, $s_2$, ..., $s_n$] shown in FIG. 2, as an output of the decoder, for example, an output sentence "a man is shooting" shown in FIG. 2.

In the embodiment of the present disclosure, the network generating the fused feature included in the part-of-speech sequence generator may be the same as or may differ from the network (the attention mechanism network A) generating the fused feature included in the decoder. That is, the two networks may be provided independently or may be encapsulated into one network. Configuration of the networks is not limited in the embodiment of the present disclosure.

In the embodiment of the present disclosure, a probability for predicting each piece of word information correctly is represented as follows:

$$P(s_t|s_{<t}, V; \theta_s) = \text{Softmax}\left(\mathbf{W}_s h_t^{(S2)} + \mathbf{b}_s\right)$$

where $W_s$ and $b_s$ represent learnable parameters, for example, parameters learned from a process of training the decoder. $\theta_s$ represents all parameters of the decoder. The Softmax function converts the hidden state of the second layer of long short-term memory unit at the current time instant in the decoder into probability distribution of each piece of word information, and predicts the most possible word information from the probability distribution. When the decoder meets a termination condition, complete natural language description information is obtained.

In the embodiment of the present disclosure, in addition to the extraction manner and the guide manner of the global part-of-speech sequence feature described above, another neural network and nonlinear network may be used in the method for generating video description information, so as to improve the accuracy of video description. The another neural network and nonlinear network belong to the embodiments of the present disclosure.

In the embodiment of the present disclosure, the entire network shown in FIG. 2 may be trained by minimizing a model loss function $\min_\theta \mathcal{L}(\theta)$ in an end-to-end manner.

A loss function in the training process may be represented as:

$$\mathcal{L}(\theta_z, \theta_s) = \lambda \mathcal{L}(\theta_z) + (1 - \lambda)\mathcal{L}(\theta_s)$$

$$\mathcal{L}(\theta_z) = \sum_{k=1}^{N} \{-\log P(Z^k|V^k; \theta_z)\}$$

$$\mathcal{L}(\theta_s) = \sum_{k=1}^{N} \{-\log P(S^k|V^k; \theta_s)\}$$

where λ represents a balance parameter for balancing impact from losses of the part-of-speech sequence generator and the decoder. N represents the number of pieces of training data. For each piece of training data, the losses of the part-of-speech sequence generator and the decoder may be represented as:

$$P(Z^k|V^k;\ \theta_z) = \sum_t^n P\big(s_t^k\big|s_{<t}^k, V^k; \theta_z\big)$$

$$P(S^k|V^k;\ \theta_s) = \sum_t^n P\big(s_t^k\big|s_{<t}^k, V^k; \theta_s\big)$$

In the embodiment of the present disclosure, by using the part-of-speech sequence generator and the context guided, a semantic relationship between a part-of-speech sequence of natural language description information and a video feature sequence of a video can be effectively obtained, and a larger feature utilization space is provided for the decoder. Compared with the conventional art in which only a video-level visual feature is used and impact of a part of speech in a natural language is ignored, in the embodiment of the present disclosure, accurate natural language description information can be generated for the video, thereby improving performance of the generated video description information, thus being beneficial to understand and analyze a video, for example, performing video classification and retrieval, and achieving potential economic benefits.

An implementation process of the video description information generation method provided in the present disclosure is described hereinafter by using an example in which content of a video is that a man is playing basketball. As shown in FIG. 2, video frames of the video (corresponding to an input video in FIG. 2) are inputted to the encoder, that is, inputted to a convolutional neural network (corresponding to a CNN in FIG. 2) in the encoder; a video feature sequence on a frame level corresponding to the video is extracted by using the convolutional neural network, and the convolutional neural network outputs the extracted video feature sequence on a frame level. The extracted video feature sequence on a frame level is inputted to a recurrent neural network (corresponding to modules such as $h_{i-1}$ and $h_i$ in FIG. 2) in the encoder, time series information of the extracted convolutional neural network feature sequence is extracted and fused by using the recurrent neural network, and the recurrent neural network outputs the video feature sequence (for ease of description, which is referred to as an advanced video feature sequence) carrying the time series information as an output of the encoder. The advanced video sequence feature outputted by the encoder is inputted to the part-of-speech sequence generator, that is, inputted to the attention mechanism network A in the part-of-speech sequence generator. The advanced video sequence feature is fused by using the attention mechanism network A. The attention mechanism network A outputs a fused feature $\phi^{(Z)}$, and the fused feature is inputted to a single-layer long short-term memory network. The single-layer long short-term memory network outputs a predicted global part-of-speech sequence feature $\varphi$, for example, the feature corresponding to [article, noun, verb...] shown in FIG. 2, and the global part-of-speech sequence feature functions as an output of the part-of-speech sequence generator. The advanced video sequence feature outputted by the encoder and the global part-of-speech sequence feature $\varphi$ outputted by the part-of-speech sequence generator are inputted to the decoder. The advanced video sequence feature is inputted to the attention mechanism network A in the decoder. The advanced video sequence feature is fused by using the attention mechanism network A. The attention mechanism network A outputs a fused feature $\phi^{(S)}$, and the fused feature is inputted to a double-layer long short-term memory network. The global part-of-speech sequence feature $\varphi$ is inputted to the context guided CG (corresponding to the guided module in FIG. 2) in the decoder. Prediction guided information related to a to-be-predicted word at a current time instant in the global part-of-speech sequence feature is enhanced by using the context guided CG based on a word. The context guided CG outputs the prediction guided information, and the prediction guided information is inputted to the double-layer long short-term memory network. The double-layer long short-term memory network outputs predicted word information, for example, $[s_1, s_2, ..., s_n]$ shown in FIG. 2, as an output of the decoder. Finally, the decoder outputs natural language description information: "a man is shooting".

In an actual application, the encoder, the part-of-speech sequence generator, and the decoder may be integrated into a function network. During training, the encoder, the part-of-speech sequence generator, and the decoder may be trained separately, or the function network may be directly trained. In an online application process, a video is inputted to the function network, and natural language description information may be automatically outputted.

The method for generating video description information (or the function module) provided in the embodiments of the present disclosure may be deployed on a terminal for describing a video that is shot in real time, downloaded, or locally stored, or may be deployed on a cloud server for describing a video that is in a database or received.

The method for generating video description information provided in the embodiments of the present disclosure may be used for providing a video content understanding service, or may be deployed on a video website for video classification and rapid retrieval, or combined with a voice system for assisting the visually impaired.

A video processing method based on natural language description information of a video is further provided according to an embodiment of the present disclosure. The method is performed by an electronic device described below. The method includes the following steps S201 and S202.

In step S201, natural language description information of a video is obtained. The natural language description information of the video is obtained by using the method for generating video description information according to any one of the foregoing embodiments.

The video may be a video shot in real time, for example, a user behavior needs to be classified in an intelligent monitoring and behavior analysis scenario. In this case, the video may be a video shot by a camera in real time. Alternatively, the video may be a video obtained from a network, for example, a video needs to be classified in a video website or application, and rapid retrieval or video recommendation may be implemented based on a classification result. In this case, the video may be a video that is obtained from the network for previewing. Alternatively, the video may be a locally stored video.

A person skilled in the art should understand that, the foregoing several scenarios and video sources are only schematic, and appropriate changes may be made. The sources and scenarios of the video are not limited in the embodiments of the present disclosure.

In the embodiment of the present disclosure, the video may be inputted to the function network, and the natural language description information of the video is automatically outputted. For a specific implementation, one may refer to description of the embodiments above, and details are not described herein again.

In step S202, the video is processed based on the natural language description information.

The processing the video includes at least one of the following: video classification, video retrieval, and generating prompt information corresponding to the video.

For example, the processing the video includes performing video classification on the video. In an implementation, the video may be classified based on the generated natural language description information by using a classification network.

In the classification network, a text feature may be extracted from the natural language description information by using a feature extraction network, and then classification is performed based on the text feature by using a classifier.

After the natural language description information is obtained in step S201, the natural language description information is inputted to the classification network, that is, inputted to the feature extraction network in the classification network; a text feature of the natural language description information is outputted; the text feature outputted by the feature extraction network is inputted to the classifier in the classification network, and a classification result of the video is outputted, as an output of the classification network.

According to the video processing method based on natural language description information of a video provided in the embodiments of the present disclosure, a video can be automatically recognized, natural language description information of the video is outputted, and the video can be classified based on the natural language description information of the video, thereby effectively improving efficiency and accuracy of video classification.

For example, the processing the video includes performing video retrieval on the video. In an implementation, the natural language description information of the video is obtained, and the natural language description information of the video is pre-stored. When video retrieval is to be performed, a retrieval condition is received, and the retrieval condition is matched with the stored natural language description information of the video. When matching succeeds, the video corresponding to the natural language description information is obtained based on the successfully matched natural language description information, and the obtained video functions as a retrieval result for displaying.

In an implementation, to improve retrieval efficiency, the video classification methods may be combined. After the natural language description information of the video is obtained, the natural language description information of the video is classified and stored in advance. When video retrieval is to be performed, a retrieval condition is received, classification on a video corresponding to the retrieval condition is determined, and the retrieval condition is matched with the stored natural language description information of the video in the corresponding classification. When matching succeeds, the video corresponding to the natural language description information is obtained based on the successfully matched natural language description information, and the obtained video functions as a retrieval result for displaying.

According to the video processing method based on natural language description information of a video provided in the embodiments of the present disclosure, a video can be automatically recognized, natural language description information of the video is outputted, and the video can be retrieved based on the natural language description information of the video, thereby effectively improving efficiency and accuracy of video retrieval.

For example, the processing the video includes generating the prompt information corresponding to the video. In an implementation, after the natural language description information of the video is obtained, the obtained natural language description information is converted into audio information as the prompt information corresponding to the video. A specific implementation of converting natural language description information into audio information is not limited in the embodiments of the present disclosure, and may be set by a person skilled in the art according to an actual situation. The prompt information may be used for assisting a user to understand video content. For example, the prompt information may be used for assisting the visually impaired to understand video content by using auditory sensation. In another embodiment, the prompt information corresponding to the video generated according to the obtained natural language description information may be another type of information.

According to the video processing method based on natural language description information of a video provided in the embodiments of the present disclosure, a video can be automatically recognized, natural language description information of the video is outputted, and prompt information corresponding to the video can be generated based on the natural language description information of the video, thereby effectively assisting the user to understand a video.

A person skilled in the art should understand that the service scenario is only schematic, and appropriate changes may be made to be applied in another scenario. The changes belong to the spirit of the present disclosure.

An apparatus for generating a video description information is further provided according to an embodiment of the present disclosure. As shown in FIG. 5, the apparatus 50 may include: an obtaining module 501, a first generation module 502, and a second generation module 503.

The obtaining module 501 is configured to obtain a video feature sequence on a frame level corresponding to a video.

The first generation module 502 is configured to generate a global part-of-speech sequence feature of the video according to the video feature sequence.

The second generation module 503 is configured to generate natural language description information of the video according to the global part-of-speech sequence feature and the video feature sequence.

In an implementation, the video feature sequence carries time series information.

In an implementation, the first generation module 502 is configured to determine a fused feature of the video according to the video feature sequence, and generate the global part-of-speech sequence feature of the video according to the fused feature of the video.

In an implementation, the first generation module 502 is configured to determine weights corresponding to time instants of a first neural network, where the weights are weights of frame features in the video feature sequence; and respectively fuse the frame features in the video feature sequence according to the weights corresponding to the time instants, to obtain the fused features of the video that correspond to the time instants.

In an implementation, the first generation module 502 is configured to obtain the weight corresponding to a current time instant according to a part-of-speech sequence feature determined at a previous time instant and the frame features in the video feature sequence.

In an implementation, the first neural network is a long short-term memory network.

In an implementation, the second generation module 503 is configured to determine a fused feature of the video according to the video feature sequence, and generate natural language description information of the video according to the global part-of-speech sequence feature and the fused feature of the video.

In an implementation, the second generation module 503 is configured to determine weights corresponding to time instants of a second neural network, where weights are weights of frame features in the video feature sequence; and respectively fuse the frame features in the video feature sequence according to the weights corresponding to the time instants, to obtain the fused features of the video that correspond to the time instants.

In an implementation, the second generation module 503 is configured to obtain prediction guided information at a current time instant in the global part-of-speech sequence feature according to word information corresponding to a previous time instant and the global part-of-speech sequence feature; obtain word information corresponding to the current time instant according to the fused feature of the video and the prediction guided information by using the second neural network; and generate the natural language description information of the video according to word information corresponding to the time instants.

In an implementation, the second neural network is a long short-term memory network.

In an implementation, the second generation module 503 is configured to obtain the prediction guided information at the current time instant in the global part-of-speech sequence feature according to the word information determined at the previous time instant and the global part-of-speech sequence feature by using a context guided.

According to the apparatus for generating video description information provided in the embodiment of the present disclosure, a semantic relationship between a part-of-speech sequence of natural language description information and a video feature sequence of a video can be effectively obtained, and a larger feature utilization space is provided for the decoder. Compared with the conventional art in which only a video-level visual feature is used and impact from part of speech in a natural language is ignored, in the embodiment of the present disclosure, accurate natural language description information can be generated for the video, thereby improving performance of the generated video description information, thus being beneficial to understand and analyze a video, for example, performing video classification and retrieval, and achieving potential economic benefits.

A person skilled in the art may clearly understand that an implementation principle and a technical effect of the apparatus for generating video description information provided in the embodiments of the present disclosure are the same as those of the foregoing method embodiments. For the convenience and conciseness of the description, for the parts not mentioned in the apparatus embodiment, one may refer to the corresponding content in the foregoing method embodiment, and details are not described herein again.

A video processing apparatus based on natural language description information of a video is further provided according to an embodiment of the present disclosure. The video processing apparatus may include: an obtaining module and a processing module.

The obtaining module is configured to obtain natural language description information of a video. The natural language description information of the video is obtained by using the method for generating video description information according to any one of the foregoing embodiments.

The processing module is configured to process the video based on the natural language description information.

In an implementation, the processing the video includes at least one of the following: video classification, video retrieval, and generating prompt information corresponding to the video.

A person skilled in the art may clearly understand that an implementation principle and a technical effect of the video processing apparatus based on natural language description information of a video provided in the embodiments of the present disclosure are the same as those of the foregoing method embodiments. For the convenience and conciseness of the description, for the parts not mentioned in the apparatus embodiment, one may refer to the corresponding content in the foregoing method embodiment, and details are not described herein again.

An electronic device is further provided according to an embodiment of the present disclosure. The electronic device includes a processor and a memory. The memory stores instructions, and the instructions, when executed by the processor, cause the processor to perform the corresponding method in the foregoing method embodiments.

In an example, the electronic device may include the encoder, the decoder, and the part-of-speech sequence generator shown in FIG. 2.

In an example, the electronic device may further include a transceiver. The processor is connected to the transceiver via a bus. It should be noted that, in an actual application, there may be one or more transceivers. The structure of the electronic device is not limited in the embodiment of the present disclosure.

The processor may be a CPU, a general-purpose processor, a DSP, an ASIC, an FPGA or another programmable logic device, a transistor logic device, a hardware component, or any combination thereof. The processor may implement or perform various schematic logic blocks, modules, and circuits described with reference to content disclosed in the embodiments of the present disclosure. The processor may be a combination to implement a computing function, for example, may be a combination of one or more microprocessors, or a combination of a DSP and a microprocessor.

The bus may include a channel, to transmit information between the foregoing components. The bus may be a PCI bus, an EISA bus, or the like. The bus may be classified into an address bus, a data bus, a control bus, or the like. The memory may be a ROM or another type of static storage device that can store static information and a static instruction; or a RAM or another type of dynamic storage device that can store information and an instruction; or may be an EEPROM, a CD-ROM or another compact-disc storage medium, optical disc storage medium (including a compact disc, a laser disk, an optical disc, a digital versatile disc, a Blu-ray disc, or the like) and magnetic disk storage medium, another magnetic storage device, or any other medium that can be configured to carry or store expected program code in a form of an instruction or a data structure and that is accessible by a computer. Types of the memory are not limited herein.

According to the electronic device provided in the embodiments of the present disclosure, a semantic relationship between a part-of-speech sequence of natural language description information and a video feature sequence of a video can be effectively obtained, and a larger feature utilization space is provided for the decoder. Compared with the conventional art in which only a video-level visual feature is used and impact from part of speech in a natural language is ignored, in the embodiment of the present disclosure, accurate natural language description information can be generated for the video, thereby improving performance of the generated video description information, thus being beneficial to understand and analyze a video, for example, performing video classification and retrieval, and achieving potential economic benefits.

A readable storage medium is further provided according to an embodiment of the present disclosure, for example, a computer-readable storage medium. The computer-readable storage medium is configured to store computer instructions, and the computer instructions, when run on a computer, cause the computer to perform corresponding operations in the foregoing method embodiments. In the embodiments of the present disclosure, a global part-of-speech sequence feature corresponding to a natural language can be extracted effectively from video data and can be used for generating accurate natural language description, thereby improving a video description capability.

It is to be understood that, although the steps in the flowchart in the accompanying drawings are sequentially shown according to indication of an arrow, the steps are not necessarily sequentially performed according to a sequence indicated by the arrow. Unless explicitly specified in this specification, the steps are unnecessary to be performed in the fixed sequence, and the steps may be performed in other sequences. In addition, at least some steps in the flowcharts in the accompanying drawings may include multiple substeps or multiple stages. The substeps or the stages are not necessarily performed at the same time instant, but may be performed at different time instants. The substeps or the stages are not necessarily performed in sequence, but may be performed in turn or alternately with another step or at least some of substeps or stages of the another step.

**Claims**

1. A method for generating video description information in order to provide a textual understanding of a video, performed by a processor of an electronic device when the processor executes instructions stored in a memory of the electronic device, the method comprising:

obtaining a video feature sequence on a frame level corresponding to the video, the video feature sequence being a sequence formed by combining video features of all video image frames, wherein the video features are extracted from each video image frame of the video by using a convolutional neural network (S101);
generating a global part-of-speech sequence feature of the video according to the video feature sequence (S102), the global part-of-speech sequence feature being a feature of a sequence of parts of speech, the parts of speech each comprising an attribute of a character, a word, or a phrase;
generating natural language description information of the video according to the global part-of-speech sequence feature and the video feature sequence (S103); and
automatically outputting the natural language description information,
wherein the generating a global part-of-speech sequence feature of the video according to the video feature sequence (S102) comprises:

determining a fused feature of the video according to the video feature sequence; and
generating the global part-of-speech sequence feature of the video based on the fused feature of the video by utilizing a first neural network,
wherein the determining a fused feature of the video according to the video feature sequence comprises:

determining weights corresponding to time instants of the first neural network, wherein the weights are weights of frame features in the video feature sequence; and
fusing the frame features in the video feature sequence respectively according to the weights corresponding to the time instants, to obtain the fused features of the video that correspond to the time instants,

wherein the generating natural language description information of the video according to the global part-of-speech sequence feature and the video feature sequence (S103) comprises:

determining a fused feature of the video according to the video feature sequence; and
generating the natural language description information of the video according to the global part-of-speech sequence feature and the fused feature of the video by utilizing a second neural network, wherein

the time instants of the first neural network are different points in time at which fused features $\phi_t^{(Z)}$ are inputted to the first neural network, the time instants refer to timesteps t in a recurrent neural network, RNN, each fused feature $\phi_t^{(Z)}$ is input at timestep t; wherein the determining weights corresponding to time instants of the first neural network comprises:

obtaining a weight corresponding to a current time instant according to a part-of-speech sequence feature determined at a previous time instant and the frame features in the video feature sequence, wherein a weight of the i-th frame feature in the video feature sequence that corresponds to the time instant t is $\alpha_i^t$, to obtain fused features of the video corresponding to the time instants:

$$\phi_t^{(Z)}(H) = \sum_{i=1}^{m} \alpha_i^t \, h_i$$

where $\phi_t^{(Z)}(H)$ represents a fused feature obtained at the time instant t of the first neural network, $\alpha_i^t$ represents a weight dynamically allocated to the i-th frame feature at the time instant t according to an attention mechanism, which meets:

$$\sum_{i=1}^{m} \alpha_i^t = 1$$

the second neural network obtains the global part-of-speech sequence feature and the fused feature of the video as inputs and outputs the natural language description information,
the generating the natural language description information of the video according to the global part-of-speech sequence feature and the fused feature of the video by utilizing a second neural network comprises:

obtaining prediction guided information corresponding to a current time instant in the global part-of-speech sequence feature according to word information corresponding to a previous time instant and the global part-of-speech sequence feature;
obtaining word information corresponding to the current time instant according to the fused feature of the video and the prediction guided information by utilizing the second neural network; and
generating the natural language description information of the video according to word information corresponding to time instants, and
the obtaining prediction guided information corresponding to a current time instant in the global part-of-speech sequence feature according to word information determined at a previous time instant and the global part-of-speech sequence feature comprises:

obtaining the prediction guided information corresponding to the current time instant in the global part-of-speech sequence feature according to the word information determined at the previous time instant and the global part-of-speech sequence feature by utilizing a context guided network;
wherein the prediction guided information gt is expressed as:

gt =f ($s_{t-1}$ , global part-of-speech sequence feature);
where $s_{t-1}$ represents word information predicted at a previous time instant, f represents function of the context guided network.

2. The method according to claim 1, wherein the video feature sequence includes time series information and is obtained by: extracting time series information of the video feature sequence according to a time series relationship between the video features in the video feature sequence in a time direction, and fusing the extracted time series information with the video feature sequence.

3. The method according to claim 1, wherein the first neural network is a long short-term memory network.

4. The method according to claim 1, wherein the determining a fused feature of the video according to the video feature sequence comprises:

determining weights corresponding to time instants of the second neural network, wherein the weights are weights of frame features in the video feature sequence; and
fusing the frame features in the video feature sequence respectively according to the weights corresponding to the time instants, to obtain the fused features of the video that correspond to the time instants.

5. A video processing method based on natural language description information of a video, performed by an electronic device, the method comprising:

obtaining natural language description information of a video, wherein the natural language description information of the video is obtained by utilizing the method according to any one of claims 1 to 4 (S201); and

processing the video based on the natural language description information (S202).

6. The video processing method according to claim 5, wherein the processing the video comprises at least one of: video classification, video retrieval, and generating prompt information corresponding to the video.

7. The video processing method according to claim 6, further comprising:

in a case that the processing the video comprises the video classification and after the natural language description information of the video is obtained, inputting the obtained natural language description information of the video to a classification network, outputting a text feature of the natural language description information, inputting the text feature to a classifier of the classification network, and outputting a classification result of the video; and

in a case that the processing the to-be-processed video comprises generating the prompt information corresponding to the to-be-processed video and after the natural language description information of the to-be-processed video is obtained, converting the obtained natural language description information into audio information as the prompt information corresponding to the to-be-processed video.

8. An electronic device, comprising a processor and a memory, wherein the memory stores instructions, and the instructions, when executed by the processor, cause the processor to perform the method according to any one of claims 1 to 7.

9. A computer-readable storage medium, storing a computer instruction, a program, a code set, or an instruction set, wherein the computer instruction, the program, the code set, or the instruction set, when run on a computer, causes the computer to perform the method according to any one of claims 1 to 7.

**Patentansprüche**

1. Ein Verfahren zum Erzeugen von Videobeschreibungsinformation, um ein textuelles Verständnis eines Videos bereitzustellen, ausgeführt von einem Prozessor einer elektronischen Vorrichtung, wenn der Prozessor in einem Speicher der elektronischen Vorrichtung gespeicherte Anweisungen ausführt, wobei das Verfahren umfasst:

Erhalten einer Video-Merkmalssequenz auf einer Frame-Ebene, die dem Video entspricht, wobei die Video-Merkmalssequenz eine Sequenz ist, die durch Kombinieren von Videomerkmalen aller Videobildframes gebildet wird, wobei die Videomerkmale aus jedem Videobildframe des Videos unter Verwendung eines konvolutionalen neuronalen Netzwerks extrahiert werden (S101);

Erzeugen eines globalen Wortart-Sequenzmerkmals des Videos gemäß der Video-Merkmalssequenz (S102), wobei das globale Wortart-Sequenzmerkmal ein Merkmal einer Sequenz von Wortarten ist, wobei die Wortarten jeweils ein Attribut eines Zeichens, eines Worts oder einer Phrase umfassen;

Erzeugen von natürlichsprachlicher Beschreibungsinformation des Videos gemäß dem globalen Wortart-Sequenzmerkmal und der Video-Merkmalssequenz (S103); und

automatisches Ausgeben der natürlichsprachlichen Beschreibungsinformation,

wobei das Erzeugen eines globalen Wortart-Sequenzmerkmals des Videos gemäß der Video-Merkmalssequenz (S102) umfasst:

Bestimmen eines fusionierten Merkmals des Videos gemäß der Video-Merkmalssequenz; und

Erzeugen des globalen Wortart-Sequenzmerkmals des Videos basierend auf dem fusionierten Merkmal des Videos unter Nutzung eines ersten neuronalen Netzwerks,

wobei das Bestimmen eines fusionierten Merkmals des Videos gemäß der Video-Merkmalssequenz umfasst:

Bestimmen von Gewichten, die Zeitpunkten des ersten neuronalen Netzwerks entsprechen, wobei die Gewichte Gewichte von Frame-Merkmalen in der Video-Merkmalssequenz sind; und

jeweiliges Fusionieren der Frame-Merkmale in der Video-Merkmalssequenz gemäß den Gewichten, die den Zeitpunkten entsprechen, um die fusionierten Merkmale des Videos zu erhalten, die den Zeitpunkten entsprechen,

wobei das Erzeugen von natürlichsprachlicher Beschreibungsinformation des Videos gemäß dem globalen Wortart-Sequenzmerkmal und der Video-Merkmalssequenz (S103) umfasst:

Bestimmen eines fusionierten Merkmals des Videos gemäß der Video-Merkmalssequenz; und Erzeugen der natürlichsprachlichen Beschreibungsinformation des Videos gemäß dem globalen Wortart-Sequenzmerkmal und dem fusionierten Merkmal des Videos unter Nutzung eines zweiten neuronalen Netzwerks, wobei

die Zeitpunkte des ersten neuronalen Netzwerks verschiedene Zeitpunkte sind, zu denen fusionierte Merkmale $\phi_t^{(Z)}$ in das erste neuronale Netzwerk eingegeben werden, die Zeitpunkte sich auf Zeitschritte t in einem rekurrenten neuronalen Netzwerk, RNN, beziehen, wobei jedes fusionierte Merkmal $\phi_t^{(Z)}$ bei dem Zeitschritt t eingegeben wird; wobei das Bestimmen von Gewichten, die Zeitpunkten des ersten neuronalen Netzwerks entsprechen, umfasst:

Erhalten eines Gewichts, das einem aktuellen Zeitpunkt entspricht, gemäß einem bei einem vorherigen Zeitpunkt bestimmten Wortart-Sequenzmerkmal und den Frame-Merkmalen in der Video-Merkmalssequenz, wobei ein Gewicht des i-ten Frame-Merkmals in der Video-Merkmalssequenz, das dem Zeitpunkt t entspricht, $\alpha_i^t$, ist, um fusionierte Merkmale des Videos zu erhalten, die den Zeitpunkten entsprechen:

$$\phi_t^{(Z)}(H) = \sum_{i=1}^{m} \alpha_i^t \, h_i$$

wobei $\phi_t^{(Z)}(H)$ ein bei dem Zeitpunkt t des ersten neuronalen Netzwerks erhaltenes fusioniertes Merkmal darstellt, $\alpha_i^t$ ein Gewicht darstellt, das dem i-ten Frame-Merkmal bei dem Zeitpunkt t gemäß einem Aufmerksamkeitsmechanismus dynamisch zugeteilt wird, der erfüllt:

$$\sum_{i=1}^{m} \alpha_i^t = 1$$

das zweite neuronale Netzwerk das globale Wortart-Sequenzmerkmal und das fusionierte Merkmal des Videos als Eingaben erhält und die natürlichsprachliche Beschreibungsinformation ausgibt,

wobei das Erzeugen der natürlichsprachlichen Beschreibungsinformation des Videos gemäß dem globalen Wortart-Sequenzmerkmal und dem fusionierten Merkmal des Videos unter Nutzung eines zweiten neuronalen Netzwerks umfasst:

Erhalten von vorhersagegeleiteter Information, die einem aktuellen Zeitpunkt in dem globalen Wortart-Sequenzmerkmal entspricht, gemäß Wortinformation, die einem vorherigen Zeitpunkt entspricht, und dem globalen Wortart-Sequenzmerkmal;

Erhalten von Wortinformation, die dem aktuellen Zeitpunkt entspricht, gemäß dem fusionierten Merkmal des Videos und der vorhersagegeleiteten Information unter Nutzung des zweiten neuronalen Netzwerks; und

Erzeugen der natürlichsprachlichen Beschreibungsinformation des Videos gemäß Wortinformation, die Zeitpunkten entspricht, und

wobei das Erhalten von vorhersagegeleiteter Information, die einem aktuellen Zeitpunkt in dem globalen Wortart-Sequenzmerkmal entspricht, gemäß Wortinformation, die bei einem vorherigen Zeitpunkt bestimmt wurde, und dem globalen Wortart-Sequenzmerkmal umfasst:

Erhalten der vorhersagegeleiteten Information, die dem aktuellen Zeitpunkt in dem globalen Wortart-Sequenzmerkmal entspricht, gemäß der bei dem vorherigen Zeitpunkt bestimmten Wortinformation und dem globalen Wortart-Sequenzmerkmal unter Nutzung eines kontextgeleiteten Netzwerks;

wobei die vorhersagegeleitete Information gt ausgedrückt wird als:

gt =f (s$_{t-1}$, globales Wortart-Sequenzmerkmal);
wobei s$_{t-1}$ eine bei einem vorherigen Zeitpunkt vorhergesagte Wortinformation darstellt, f eine Funktion des kontextgeleiteten Netzwerks darstellt.

2. Das Verfahren gemäß Anspruch 1, wobei die Video-Merkmalssequenz Zeitreiheninformation umfasst und erhalten wird durch: Extrahieren von Zeitreiheninformation der Video-Merkmalssequenz gemäß einer Zeitreihenbeziehung zwischen den Videomerkmalen in der Video-Merkmalssequenz in einer Zeitrichtung und Fusionieren der extrahierten Zeitreiheninformation mit der Video-Merkmalssequenz.

3. Das Verfahren gemäß Anspruch 1, wobei das erste neuronale Netzwerk ein Long-Short-Term-Memory-Netzwerk ist.

4. Das Verfahren gemäß Anspruch 1, wobei das Bestimmen eines fusionierten Merkmals des Videos gemäß der Video-Merkmalssequenz umfasst:

Bestimmen von Gewichten, die Zeitpunkten des zweiten neuronalen Netzwerks entsprechen, wobei die Gewichte Gewichte von Frame-Merkmalen in der Video-Merkmalssequenz sind; und
jeweiliges Fusionieren der Frame-Merkmale in der Video-Merkmalssequenz gemäß den Gewichten, die den Zeitpunkten entsprechen, um die fusionierten Merkmale des Videos zu erhalten, die den Zeitpunkten entsprechen.

5. Ein Videoverarbeitungsverfahren basierend auf natürlichsprachlicher Beschreibungsinformation eines Videos, ausgeführt von einer elektronischen Vorrichtung, wobei das Verfahren umfasst:

Erhalten von natürlichsprachlicher Beschreibungsinformation eines Videos, wobei die natürlichsprachliche Beschreibungsinformation des Videos unter Nutzung des Verfahrens gemäß einem der Ansprüche 1 bis 4 erhalten wird (S201); und
Verarbeiten des Videos basierend auf der natürlichsprachlichen Beschreibungsinformation (S202).

6. Das Videoverarbeitungsverfahren gemäß Anspruch 5, wobei das Verarbeiten des Videos mindestens eines von Folgendem umfasst: Videoklassifikation, Videorückgewinnung und Erzeugen von Prompt-Information, die dem Video entspricht.

7. Das Videoverarbeitungsverfahren gemäß Anspruch 6, ferner umfassend:

in einem Fall, dass das Verarbeiten des Videos die Videoklassifikation umfasst, und nachdem die natürlichsprachliche Beschreibungsinformation des Videos erhalten wird, Eingeben der erhaltenen natürlichsprachlichen Beschreibungsinformation des Videos in ein Klassifikationsnetzwerk, Ausgeben eines Textmerkmals der natürlichsprachlichen Beschreibungsinformation, Eingeben des Textmerkmals in einen Klassifikator des Klassifikationsnetzwerks und Ausgeben eines Klassifikationsergebnisses des Videos; und
in einem Fall, dass das Verarbeiten des zu verarbeitenden Videos das Erzeugen der Prompt-Information, die dem zu verarbeitenden Video entspricht, umfasst, und nachdem die natürlichsprachliche Beschreibungsinformation des zu verarbeitenden Videos erhalten wird, Umwandeln der erhaltenen natürlichsprachlichen Beschreibungsinformation in Audioinformation als die Prompt-Information, die dem zu verarbeitenden Video entspricht.

8. Eine elektronische Vorrichtung, umfassend einen Prozessor und einen Speicher, wobei der Speicher Anweisungen speichert, und die Anweisungen, wenn sie durch den Prozessor ausgeführt werden, den Prozessor veranlassen, das Verfahren gemäß einem der Ansprüche 1 bis 7 auszuführen.

9. Ein computerlesbares Speichermedium, das eine Computeranweisung, ein Programm, einen Codesatz oder einen Anweisungssatz speichert, wobei die Computeranweisung, das Programm, der Codesatz oder der Anweisungssatz, wenn sie bzw. er auf einem Computer ausgeführt werden bzw. wird, den Computer veranlassen bzw. veranlasst, das Verfahren gemäß einem der Ansprüche 1 bis 7 auszuführen.

**Revendications**

1. Procédé de génération d'informations de description de vidéo afin de fournir une compréhension textuelle d'une vidéo, mis en œuvre par un processeur d'un dispositif électronique lorsque le processeur exécute des instructions stockées dans une mémoire du dispositif électronique, le procédé comprenant :

l'obtention d'une séquence de caractéristiques vidéo à un niveau trame correspondant à la vidéo, la séquence de caractéristiques vidéo étant une séquence formée par combinaison de caractéristiques vidéo de toutes les trames d'image vidéo, dans lequel les caractéristiques vidéo sont extraites à partir de chaque trame d'image vidéo de la vidéo en utilisant un réseau neuronal convolutif (S101) ;

la génération d'une caractéristique globale de séquence de parties du discours de la vidéo selon la séquence de caractéristiques vidéo (S102), la caractéristique globale de séquence de parties du discours étant une caractéristique d'une séquence de parties du discours, les parties du discours comprenant chacune un attribut d'un caractère, d'un mot ou d'une expression ;

la génération d'informations de description en langage naturel de la vidéo selon la caractéristique globale de séquence de parties du discours et la séquence de caractéristiques vidéo (S103) ; et

la sortie automatique des informations de description en langage naturel,

dans lequel la génération d'une caractéristique globale de séquence de parties du discours de la vidéo selon la séquence de caractéristiques vidéo (S102) comprend :

la détermination d'une caractéristique fusionnée de la vidéo selon la séquence de caractéristiques vidéo ; et

la génération de la caractéristique globale de séquence de parties du discours de la vidéo sur la base de la caractéristique fusionnée de la vidéo en utilisant un premier réseau neuronal,

dans lequel la détermination d'une caractéristique fusionnée de la vidéo selon la séquence de caractéristiques vidéo comprend :

la détermination de poids correspondant à des instants temporels du premier réseau neuronal, dans lequel les poids sont des poids de caractéristiques de trame dans la séquence de caractéristiques vidéo ; et

la fusion des caractéristiques de trame dans la séquence de caractéristiques vidéo respectivement selon les poids correspondant aux instants temporels, afin d'obtenir les caractéristiques fusionnées de la vidéo qui correspondent aux instants temporels,

dans lequel la génération d'informations de description en langage naturel de la vidéo selon la caractéristique globale de séquence de parties du discours et la séquence de caractéristiques vidéo (S103) comprend :

la détermination d'une caractéristique fusionnée de la vidéo selon la séquence de caractéristiques vidéo ; et

la génération des informations de description en langage naturel de la vidéo selon la caractéristique globale de séquence de parties du discours et la caractéristique fusionnée de la vidéo en utilisant un second réseau neuronal, dans lequel

les instants temporels du premier réseau neuronal sont différents points dans le temps auxquels des caractéristiques fusionnées $\phi_t^{(Z)}$ sont entrées dans le premier réseau neuronal, les instants temporels se rapportent à des pas de temps t dans un réseau neuronal récurrent, RNN, chaque caractéristique fusionnée $\phi_t^{(Z)}$ étant entrée au pas de temps t ; dans lequel la détermination de poids correspondant à des instants temporels du premier réseau neuronal comprend :

l'obtention d'un poids correspondant à un instant temporel courant selon une caractéristique de séquence de parties du discours déterminée à un instant temporel précédent et les caractéristiques de trame dans la séquence de caractéristiques vidéo, dans lequel un poids de la i-ième caractéristique de trame dans la séquence de caractéristiques vidéo qui correspond à l'instant temporel t est $\alpha_i^t$, afin d'obtenir des caractéristiques fusionnées de la vidéo correspondant aux instants temporels :

$$\phi_t^{(Z)}(H) = \sum_{i=1}^{m} \alpha_i^t \, h_i$$

où $\phi_t^{(Z)}(H)$ représente une caractéristique fusionnée obtenue à l'instant temporel t du premier réseau neuronal, $\alpha_i^t$ représente un poids alloué dynamiquement à la i-ième caractéristique de trame à l'instant temporel t selon un mécanisme d'attention, lequel satisfait :

$$\sum_{i=1}^{m} \alpha_i^t = 1$$

le second réseau neuronal obtient la caractéristique globale de séquence de parties du discours et la caractéristique fusionnée de la vidéo en tant qu'entrées et sort les informations de description en langage naturel,

la génération des informations de description en langage naturel de la vidéo selon la caractéristique globale de séquence de parties du discours et la caractéristique fusionnée de la vidéo en utilisant un second réseau neuronal comprend :

l'obtention d'informations guidées par prédiction correspondant à un instant temporel courant dans la caractéristique globale de séquence de parties du discours selon des informations de mot correspondant à un instant temporel précédent et la caractéristique globale de séquence de parties du discours ;

l'obtention d'informations de mot correspondant à l'instant temporel courant selon la caractéristique fusionnée de la vidéo et les informations guidées par prédiction en utilisant le second réseau neuronal ; et

la génération des informations de description en langage naturel de la vidéo selon des informations de mot correspondant à des instants temporels, et

l'obtention d'informations guidées par prédiction correspondant à un instant temporel courant dans la caractéristique globale de séquence de parties du discours selon des informations de mot déterminées à un instant temporel précédent et la caractéristique globale de séquence de parties du discours comprend :

l'obtention des informations guidées par prédiction correspondant à l'instant temporel courant dans la caractéristique globale de séquence de parties du discours selon les informations de mot déterminées à l'instant temporel précédent et la caractéristique globale de séquence de parties du discours en utilisant un réseau guidé par le contexte ;

dans lequel les informations guidées par prédiction gt sont exprimées comme suit :

gt =f ($s_{t-1}$ , global part-of-speech sequence feature);

où $s_{t-1}$ représente des informations de mot prédites à un instant temporel précédent, f représente une fonction du réseau guidé par le contexte.

2. Procédé selon la revendication 1, dans lequel la séquence de caractéristiques vidéo comprend des informations de série temporelle et est obtenue par : l'extraction d'informations de série temporelle de la séquence de caractéristiques vidéo selon une relation de série temporelle entre les caractéristiques vidéo dans la séquence de caractéristiques vidéo dans une direction temporelle, et la fusion des informations de série temporelle extraites avec la séquence de caractéristiques vidéo.

3. Procédé selon la revendication 1, dans lequel le premier réseau neuronal est un réseau à mémoire à long et court terme.

4. Procédé selon la revendication 1, dans lequel la détermination d'une caractéristique fusionnée de la vidéo selon la séquence de caractéristiques vidéo comprend :

la détermination de poids correspondant à des instants temporels du second réseau neuronal, dans lequel les poids sont des poids de caractéristiques de trame dans la séquence de caractéristiques vidéo ; et

la fusion des caractéristiques de trame dans la séquence de caractéristiques vidéo respectivement selon les poids correspondant aux instants temporels, afin d'obtenir les caractéristiques fusionnées de la vidéo qui correspondent aux instants temporels.

5. Procédé de traitement vidéo fondé sur des informations de description en langage naturel d'une vidéo, mis en œuvre par un dispositif électronique, le procédé comprenant :

l'obtention d'informations de description en langage naturel d'une vidéo, dans lequel les informations de description en langage naturel de la vidéo sont obtenues en utilisant le procédé selon l'une quelconque des revendications 1 à 4 (S201) ; et
le traitement de la vidéo sur la base des informations de description en langage naturel (S202).

6. Procédé de traitement vidéo selon la revendication 5, dans lequel le traitement de la vidéo comprend au moins l'un parmi : la classification de vidéo, la recherche de vidéo, et la génération d'informations d'invite correspondant à la vidéo.

7. Procédé de traitement vidéo selon la revendication 6, comprenant en outre :

dans un cas où le traitement de la vidéo comprend la classification de vidéo et après obtention des informations de description en langage naturel de la vidéo, l'entrée des informations de description en langage naturel obtenues de la vidéo dans un réseau de classification, la sortie d'une caractéristique de texte des informations de description en langage naturel, l'entrée de la caractéristique de texte dans un classificateur du réseau de classification, et la sortie d'un résultat de classification de la vidéo ; et
dans un cas où le traitement de la vidéo à traiter comprend la génération des informations d'invite correspondant à la vidéo à traiter et après obtention des informations de description en langage naturel de la vidéo à traiter, la conversion des informations de description en langage naturel obtenues en informations audio en tant qu'informations d'invite correspondant à la vidéo à traiter.

8. Dispositif électronique, comprenant un processeur et une mémoire, dans lequel la mémoire stocke des instructions, et les instructions, lorsqu'elles sont exécutées par le processeur, amènent le processeur à exécuter le procédé selon l'une quelconque des revendications 1 à 7.

9. Support de stockage lisible par ordinateur, stockant une instruction d'ordinateur, un programme, un ensemble de codes ou un ensemble d'instructions, dans lequel l'instruction d'ordinateur, le programme, l'ensemble de codes ou l'ensemble d'instructions, lorsqu'il est exécuté sur un ordinateur, amène l'ordinateur à exécuter le procédé selon l'une quelconque des revendications 1 à 7.

Obtain a video feature sequence on a frame level corresponding to a video — S101

Generate a global part-of-speech sequence feature of the video according to the video feature sequence — S102

Generate natural language description information of the video according to the global part-of-speech sequence feature and the video feature sequence — S103

**FIG. 1A**

Obtain natural language description information of a video, the natural language description information of the video being obtained by using the method for generating video description information described above — S201

Process the video based on the natural language description information — S202

**FIG. 1B**

**FIG. 2**

**FIG. 3**

EP 3 951 617 B1

**FIG. 4**

Apparatus for generating video description information — 50

Obtaining module — 501

First generation module — 502

Second generation module — 503

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910263207

- CN 109359214 A

**Non-patent literature cited in the description**

- **LI SHUOHAO et al.** *Deep Hierarchical Attention Network for Video Description*, 2018